# EUROPEAN PATENT APPLICATION

(11) **EP 4 738 159 A1**
(43) Date of publication of application: **06.05.2026**
(21) Application number: 24210897.5
(22) Date of filing: 05.11.2024
(51) Int. Cl.: G06F 21/43, H04L 9/40, H04W 4/80

(54) **SECURE ELEMENT AND METHOD OF OPERATING THE SAME**

(71) Applicant: NXP B.V., 5656 AG Eindhoven (NL)
(72) Inventor: Kramer, Torsten Joachim, 5656AG Eindhoven (NL)
(74) Representative: Krott, Michel

(57) **Abstract**

In accordance with a first aspect of the present disclosure, a secure element is provided, comprising: a first physical communication interface; a second physical communication interface; a processing unit configured to perform a first authentication process with a first user through the first physical communication interface and to perform a second authentication process with a second user through the second physical communication interface. In accordance with further aspects of the present disclosure, a corresponding method of operating a secure element is conceived, and a corresponding computer program is provided.

## Description

### TECHNICAL FIELD

The present disclosure relates to a secure element. Furthermore, the present disclosure relates to a corresponding method of operating a secure element, and to a corresponding computer program.

### BACKGROUND

Many electronic devices, such as mobile phones and tablets, may contain data and functions that should be protected. For example, electronic commerce depends upon secure operation of many devices, used in smart homes, communication applications or used as smart gadgets or mobile phones. In such a case, it is important that that the maintenance of such devices (e.g., the firmware update) is operated in a secure manner, so that no third party (e.g., a hacker) is able to attack the secure communication and operation of such devices.

### SUMMARY

In accordance with a first aspect of the present disclosure, a secure element is provided, comprising: a first physical communication interface; a second physical communication interface; a processing unit configured to perform a first authentication process with a first user through the first physical communication interface and to perform a second authentication process with a second user through the second physical communication interface.

In one or more embodiments, the second physical communication interface is a wireless interface.

In one or more embodiments, the second physical communication interface is a short range communication interface.

In one or more embodiments, the short range communication interface is a near field communication (NFC) communication interface or an ultra-wideband (UWB) communication interface.

In one or more embodiments, the secure element is implemented as a single integrated circuit.

In one or more embodiments, the processing unit is configured to allow access to a predefined set of protected data and/or protected functions upon or after successful authentication results output by both the first authentication process and the second authentication process.

In one or more embodiments, the processing unit is configured to perform the first authentication process and the second authentication process during a single authentication session.

In one or more embodiments, the single authentication session is a session during which no power cycle or chip reset is performed by the secure element.

In one or more embodiments, the processing unit is implemented as firmware.

In one or more embodiments, the first authentication process uses one or more first authentication parameters, the second authentication process uses one or more second authentication parameters, and the first authentication parameters are different from the second authentication parameters.

In one or more embodiments, an electronic device comprises a secure element of the kind set forth.

In accordance with a second aspect of the present disclosure, a method of operating a secure element is conceived, comprising: communicating, by a processing unit included in the secure element, with a first user through a first physical communication interface included in the secure element; communicating, by the processing unit, with a second user through a second physical communication interface included in the secure element; performing, by the processing unit, a first authentication process with the first user through the first physical communication interface and a second authentication process with the second user through the second physical communication interface.

In one or more embodiments, the processing unit allows access to a predefined set of protected data and/or protected functions upon or after successful authentication results obtained from both the first authentication process and the second authentication process.

In one or more embodiments, the processing unit performs the first authentication process and the second authentication process during a single authentication session.

In accordance with a third aspect of the present disclosure, a computer program is provided, comprising executable instructions which, when executed by a processing unit included in a secure element, cause said processing unit to: communicate with a first user through a first physical communication interface included in the secure element; communicate with a second user through a second physical communication interface included in the secure element; perform a first authentication process with the first user through the first physical communication interface and a second authentication process with the second user through the second physical communication interface.

### DESCRIPTION OF DRAWINGS

Embodiments will be described in more detail with reference to the appended drawings.
Fig. 1 shows an example of an electronic device.
Fig. 2 shows an illustrative embodiment of a secure element.
Fig. 3 shows an illustrative embodiment of a method of operating a secure element.
Fig. 4 shows an illustrative embodiment of an electronic device.
Fig. 5 shows an illustrative embodiment of a secure element.

### DESCRIPTION OF EMBODIMENTS

In order to protect data and functionality contained in electronic devices, a mandatory authentication process is often implemented. Such an authentication process should be finished successfully before certain activities can be executed on these devices. Typically, for a successful authentication a secret is needed, which is presented by a user during the authentication process. However, if this secret is disclosed by accident, any third party can authenticate successfully to affected devices and can take over control at any time.

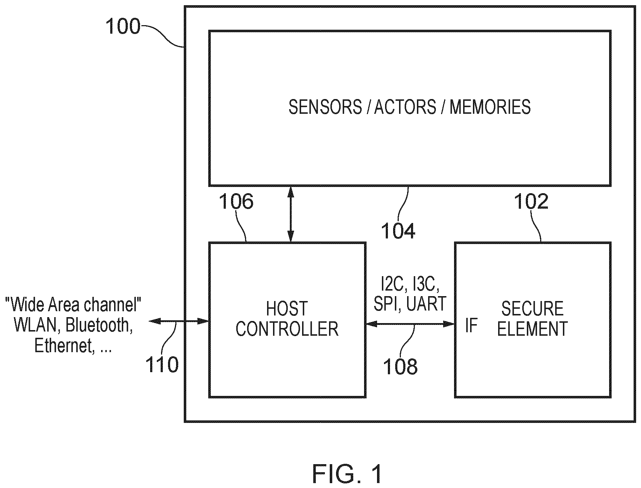

**Fig. 1** shows an example of an electronic device 100. The electronic device 100 comprises a secure element 102, a functional block 104 comprising sensors, actors and/or memories, and a host controller 106. The secure element 102 is configured to communicate with the host controller 106 through a local bus 108, such as a I2C, I3C, serial peripheral interface (SPI), or universal asynchronous receiver-transmitter (UART) bus. For this purpose, the secure element comprises a physical communication interface IF. Furthermore, the host controller 106 is coupled to a wide area channel 110, such as WLAN, Bluetooth or Ethernet channel, which allows a user to communicate with the secure element 102 through the host controller 106.

In particular, atypical smart electronic device 100 is shown. In this device 100, the host controller 106 controls several sensors, actors and/or memories 104 of the application. Furthermore, the secure element 102 is configured to store sensitive data. More specifically, the secure element 102 is configured to provide and handle secure objects for the application. The secure element 102 allows in most cases the change or update of secure objects (e.g., data and functions), which are stored in the secure element 102, as well as the update of the secure element's firmware. Such critical actions should be protected against attacks from third parties, for example from hackers. For this purpose, a user should typically be authenticated to the secure element 102, by presenting one or more secrets (i.e., credentials) during an authentication process performed through the physical communication interface IF, through the local bus 108 and the wide area channel 110. However, if the underlying secret information is disclosed, then everyone can successfully authenticate to the secure element 102.

Now discussed are a secure element, a corresponding method of operating a secure element, and a corresponding computer program, which facilitate increasing the protection of data and functions within electronic devices of the kind set forth.

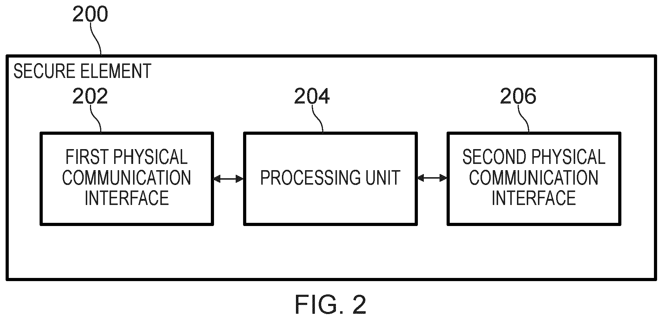

**Fig. 2** shows an illustrative embodiment of a secure element 200. The secure element 200 comprises a first physical communication interface 202, a second physical communication interface 206, and a processing unit 204. The processing unit 204 is configured to perform a first authentication process with a first user through the first physical communication interface 202 and to perform a second authentication process with a second user through the second physical communication interface 206. By performing multiple authentication processes through different physical communication interfaces, with different users, the objects (e.g., data and functions) provided within the secure element 200 may be better protected. More specifically, a second positive authentication result is needed for accessing such objects. It is noted that a secure element may be defined as a tamper-resistant integrated circuit with installed applications, which have a prescribed functionality and a prescribed level of security. Furthermore, a secure element may implement security functions, such as cryptographic functions and authentication functions.

In one or more embodiments, the second physical communication interface is a wireless interface. In this way, the additional authentication process supported by the second physical communication interface may easily be performed by a user, for example by the owner of an electronic device into which the secure element is integrated. In one or more embodiments, the second physical communication interface is a short range communication interface. Thereby, an increased level of security may be achieved, since a local presence of the user who performs the additional authentication process may be ensured. In a practical implementation, the short range communication interface is a near field communication (NFC) communication interface or an ultra-wideband (UWB) communication interface. Such interfaces are particularly suitable for ensuring the local presence of the aforementioned user. NFC refers to a set of communication protocols that enable two electronic devices to establish communication by bringing them within proximity of each other. The communication range of NFC is typically in the order of centimeters (e.g., 10 centimeters or less). UWB communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals.

In one or more embodiments, the secure element is implemented as a single integrated circuit (IC). By implementing the secure element as a single IC, in particular as a monolithic device, the level of security is further increased, because it becomes more difficult to attack the secure element by reverse engineering and man-in-the-middle attacks. In one or more embodiments, the processing unit is configured to allow access to a predefined set of protected data and/or protected functions upon or after successful authentication results output by both the first authentication process and the second authentication process. In this way, the access to sensitive data and functions may be restricted in an effective manner, thereby further increasing the level of security.

In one or more embodiments, the processing unit is configured to perform the first authentication process and the second authentication process during a single authentication session. In this way, the level of security is further increased, since it may be enforced that two independent positive authentication results are provided within a relatively short period of time. In a practical implementation, the single authentication session is a session during which no power cycle or chip reset is performed by the secure element. Furthermore, in one or more embodiments, the processing unit is implemented as firmware. In this way, a practical implementation of the processing unit is realized. In one or more embodiments, the first authentication process uses one or more first authentication parameters, the second authentication process uses one or more second authentication parameters, and the first authentication parameters are different from the second authentication parameters. In this way, the level of security is further increased, since knowledge of different authentication parameters (e.g., secrets) is needed for successfully performing the authentication processes.

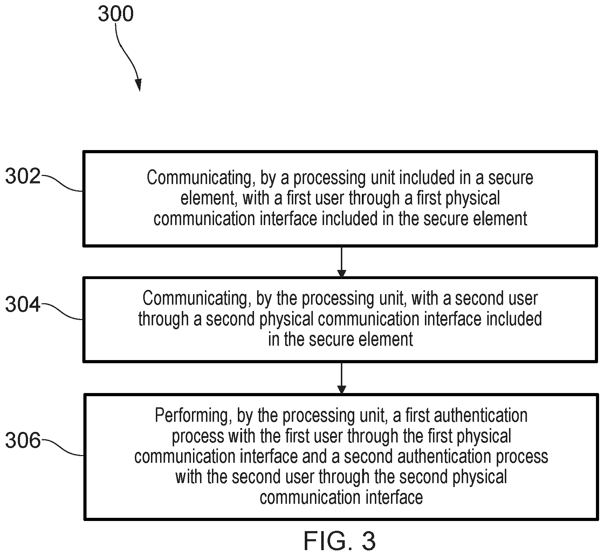

**Fig. 3** shows an illustrative embodiment of a method 300 of operating a secure element. The method 300 comprises the following steps. At 302, a processing unit included in the secure element communicates with a first user through a first physical communication interface included in the secure element. At 304, the processing unit communicates with a second user through a second physical communication interface included in the secure element. Furthermore, at 306, the processing unit performs a first authentication process with the first user through the first physical communication interface and a second authentication process with the second user through the second physical communication interface. As mentioned above with reference to the corresponding secure element shown in Fig. 2, the objects (e.g., data and functions) provided within the secure element may thereby be better protected.

In accordance with the present disclosure, a second independent authentication channel may be implemented in an electronic device, via a second independent physical communication interface that may be used by a second user (e.g., the owner of the electronic device), to allow the access by a first user (e.g., the producer or provider) to secure objects provided within the electronic device. In particular, a secure element may be connected to at least two independent physical communication interfaces. The secure element may provide functions to execute authentication processes through both physical communication interfaces with different authentication parameters.

Furthermore, the secure element may implement different security levels. For example, a security level "0" may be a standard security level after a power-on or chip reset. Then, a successful authentication performed through one of the two physical communication interfaces may enable a security level "1". As soon as there are successful authentications performed through both physical communication interfaces, without a power cycle or chip reset in between, the security level "2" may be enabled. These separate security levels may be used to classify secure objects that are stored in the secure element. The highest security level (i.e., security level "2") may be used to protect highly sensitive information, such as critical keys or firmware objects of the secure element. In addition, predefined functions or actions (such as a firmware update of the secure element) may be blocked until this highest security level is reached.

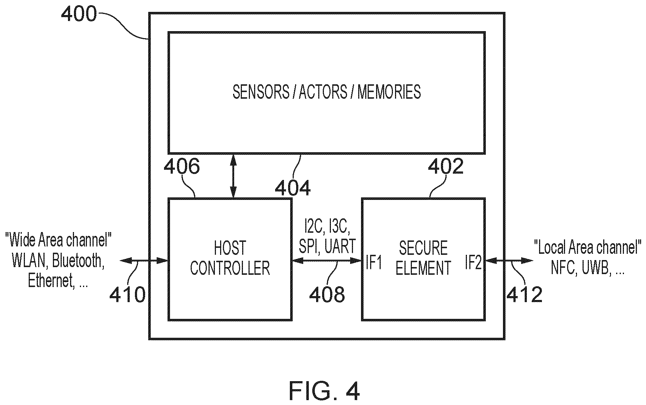

**Fig. 4** shows an illustrative embodiment of an electronic device 400. The electronic device 400 comprises a secure element 402, a functional block 404 comprising sensors, actors and/or memories, and a host controller 406. The secure element 402 is configured to communicate with the host controller 406 through a local bus 408, such as a I2C, I3C, serial peripheral interface (SPI), or universal asynchronous receiver-transmitter (UART) bus. For this purpose, the secure element comprises a first physical communication interface IF1. Furthermore, the host controller 406 is coupled to a wide area channel 110, such as WLAN, Bluetooth or Ethernet channel, which allows a first user to communicate with the secure element 402 through the host controller 406. In addition, the secure element 402 comprises a second physical communication interface IF2, which allows a second user to communicate with the secure element 402 through a local area channel, such as an NFC channel or a UWB communication channel.

In particular, the second physical communication interface IF2 may be used to prove the local presence of the second user, who may perform an authentication via this interface IF2. Both NFC and UWB may guarantee short distances between the secure element and a wireless communication device that is used by the second user to perform the authentication (i.e., from a few centimeters to a few meters). Furthermore, the firmware of the secure element 402 may execute the authentication processes via both channels in one authentication session, more specifically without any power cycle or chip reset in between the two processes.

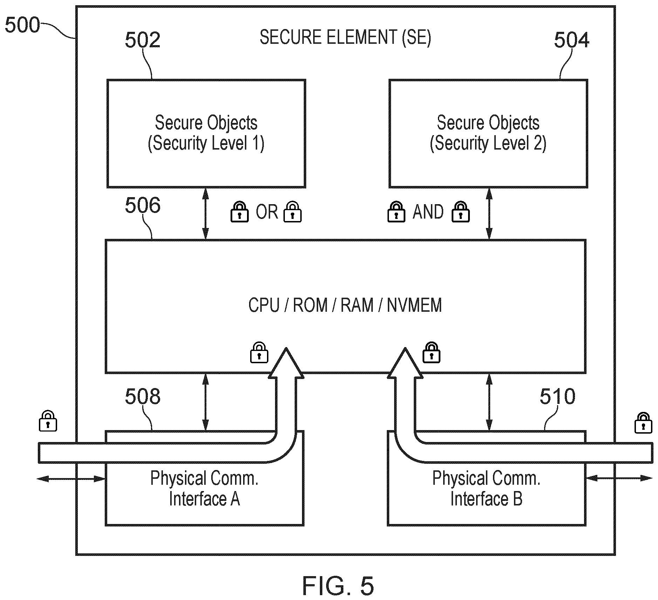

Fig. 5 shows an illustrative embodiment of a secure element 500. The secure element 500 comprises a core system, i.e., a functional block 506, which in turn includes a central processing unit (CPU), read-only memory (ROM), random access memory (RAM), and a non-volatile memory (NVMEM). Furthermore, the secure element 500 contains a first set 502 of secure objects, stored at security level "1", and a second set 504 of secure objects, stored at security level "2". The functional block 500 is coupled to a first physical communication interface 508, referred to as physical communication interface A, and a second physical communication interface 510, referred to as physical communication interface B. The CPU may be regarded as a processing unit of the kind set forth, which is configured to perform a first authentication process with a first user through the first physical communication interface 508, and to perform a second authentication process with a second user through the second physical communication interface 510.

The functional block 506 is configured to communicate with the outside world through the physical communication interfaces 508, 510. The secure objects 502, 504 are stored in separate domains of memory, depending on the classification of these objects. The access to the "security level 1" domain is granted as soon as the authentication on one of the both interfaces 508, 510 was successful. The access to the other "security level 2" domain is granted only if both authentications were executed successfully via both interfaces 508, 510. This authentication concept may be regarded as a "two-user" or "multi-user" authentication concept, similar to a "two-factor" or "multi-factor" authentication concept. In particular, the presently disclosed "multi-user" authentication concept combines at least two independent users with independent factors, which may be presented at same time to the application. To enable more than two users to authenticate to the secure element 500, one or more third physical communication interfaces (not shown) may be integrated into the secure element 500.

The secure element 500 may be implemented as a monolithic piece of silicon, including all the above-described functions and software, which is evaluated and certified by standardized Evaluation Assurance Level (EAL) security certificates. In this way, the highest possible security standards may be ensured. The multi-user authentication may be fully implemented inside the secure element 500. That is to say, the secure element 500 may store the secure objects 502, 504 and execute the authentication processes performed through the physical communication interfaces 508, 510. In this way, the system security is increased, because it is not sufficient to attack a device or application remotely by using disclosed secrets. More specifically, in this example implementation the critical activities performed by the secure element 500 should be confirmed by a second, locally present user, authenticating to the application in parallel with separate authentication parameters (i.e., parameters which are different from the authentication parameters used by the first user). In particular, by using a monolithic secure element, which includes the physical communication interfaces as well as the processing unit that executes the respective authentication processes, it is not possible anymore to attack one single functionality of the authentication process to break the whole system. Thus, the secure objects 504 stored at "security level 2", which can only be accessed if multiple authentication processes have a positive result, are adequately protected against such attacks. Furthermore, by requiring a local presence of the second user, i.e., by requiring a local physical access to the electronic device containing the secure element 500, the level of security is further increased.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: electronic device
- 102: secure element
- 104: sensors, actors and memories
- 106: host controller
- 108: I2C, I3C, SPI or UART interface
- 110: wide area channel, such as WLAN, Bluetooth and Ethernet
- 200: secure element
- 202: first physical communication interface
- 204: processing unit
- 206: second physical communication interface
- 300: method of operating a secure element
- 302: communicating, by a processing unit included in the secure element, with a first user through a first physical communication interface included in the secure element
- 304: communicating, by the processing unit, with a second user through a second physical communication interface included in the secure element
- 306: performing, by the processing unit, a first authentication process with the first user through the first physical communication interface and a second authentication process with the second user through the second physical communication interface
- 400: electronic device
- 402: secure element
- 404: sensors, actors and memories
- 406: host controller
- 408: I2C, I3C, SPI or UART interface
- 410: wide area channel, such as WLAN, Bluetooth and Ethernet
- 412: local area channel, such as NFC and UWB
- 500: secure element
- 502: secure objects (security level 1)
- 504: secure objects (security level 2)
- 506: CPU, ROM, RAM and NVMEM
- 508: physical communication interface A
- 510: physical communication interface B

## Claims

1. A secure element, comprising:
a first physical communication interface;
a second physical communication interface;
a processing unit configured to perform a first authentication process with a first user through the first physical communication interface and to perform a second authentication process with a second user through the second physical communication interface.

2. The secure element of claim 1, wherein the second physical communication interface is a wireless interface.

3. The secure element of claim 1 or 2, wherein the second physical communication interface is a short range communication interface.

4. The secure element of claim 3, wherein the short range communication interface is a near field communication, NFC, communication interface or an ultra-wideband, UWB, communication interface.

5. The secure element of any preceding claim, being implemented as a single integrated circuit.

6. The secure element of any preceding claim, wherein the processing unit is configured to allow access to a predefined set of protected data and/or protected functions upon or after successful authentication results output by both the first authentication process and the second authentication process.

7. The secure element of any preceding claim, wherein the processing unit is configured to perform the first authentication process and the second authentication process during a single authentication session.

8. The secure element of claim 7, wherein the single authentication session is a session during which no power cycle or chip reset is performed by the secure element.

9. The secure element of any preceding claim, wherein the processing unit is implemented as firmware.

10. The secure element of any preceding claim, wherein the first authentication process uses one or more first authentication parameters, wherein the second authentication process uses one or more second authentication parameters, and wherein the first authentication parameters are different from the second authentication parameters.

11. An electronic device comprising the secure element of any preceding claim.

12. A method of operating a secure element, comprising:
communicating, by a processing unit included in the secure element, with a first user through a first physical communication interface included in the secure element;
communicating, by the processing unit, with a second user through a second physical communication interface included in the secure element;
performing, by the processing unit, a first authentication process with the first user through the first physical communication interface and a second authentication process with the second user through the second physical communication interface.

13. The method of claim 12, wherein the processing unit allows access to a predefined set of protected data and/or protected functions upon or after successful authentication results obtained from both the first authentication process and the second authentication process.

14. The method of claim 12 or 13, wherein the processing unit performs the first authentication process and the second authentication process during a single authentication session.

15. A computer program comprising executable instructions which, when executed by a processing unit included in a secure element, cause said processing unit to:
communicate with a first user through a first physical communication interface included in the secure element;
communicate with a second user through a second physical communication interface included in the secure element;
perform a first authentication process with the first user through the first physical communication interface and a second authentication process with the second user through the second physical communication interface.

## Amended claims

### Amended claims in accordance with Rule 137(2) EPC.

1. A secure element (200) implemented as a single integrated circuit, comprising:
a first physical communication interface (202);
a second physical communication interface (206);
a processing unit (204) configured to perform a first authentication process with a first user through the first physical communication interface (202) and to perform a second authentication process with a second user through the second physical communication interface (206).

2. The secure element (200) of claim 1, wherein the second physical communication interface (206) is a wireless interface.

3. The secure element (200) of claim 1 or 2, wherein the second physical communication interface (206) is a short range communication interface.

4. The secure element (200) of claim 3, wherein the short range communication interface is a near field communication, NFC, communication interface or an ultra-wideband, UWB, communication interface.

5. The secure element (200) of any preceding claim, wherein the processing unit (204) is configured to allow access to a predefined set of protected data and/or protected functions upon or after successful authentication results output by both the first authentication process and the second authentication process.

6. The secure element (200) of any preceding claim, wherein the processing unit (204) is configured to perform the first authentication process and the second authentication process during a single authentication session.

7. The secure element (200) of claim 6, wherein the single authentication session is a session during which no power cycle or chip reset is performed by the secure element (200).

8. The secure element (200) of any preceding claim, wherein the processing unit (204) is implemented as firmware.

9. The secure element (200) of any preceding claim, wherein the first authentication process uses one or more first authentication parameters, wherein the second authentication process uses one or more second authentication parameters, and wherein the first authentication parameters are different from the second authentication parameters.

10. An electronic device comprising the secure element (200) of any preceding claim.

11. A method (300) of operating a secure element implemented as a single integrated circuit, comprising:
communicating (302), by a processing unit included in the secure element, with a first user through a first physical communication interface included in the secure element;
communicating (304), by the processing unit, with a second user through a second physical communication interface included in the secure element;
performing (306), by the processing unit, a first authentication process with the first user through the first physical communication interface and a second authentication process with the second user through the second physical communication interface.

12. The method (300) of claim 11, wherein the processing unit allows access to a predefined set of protected data and/or protected functions upon or after successful authentication results obtained from both the first authentication process and the second authentication process.

13. The method (300) of claim 11 or 12, wherein the processing unit performs the first authentication process and the second authentication process during a single authentication session.

14. A computer program comprising executable instructions which, when executed by a processing unit included in a secure element (200) implemented as a single integrated circuit, cause said processing unit (204) to:
communicate with a first user through a first physical communication interface (202) included in the secure element (200);
communicate with a second user through a second physical communication interface (206) included in the secure element (200);
perform a first authentication process with the first user through the first physical communication interface (202) and a second authentication process with the second user through the second physical communication interface (206).
